# EUROPÄISCHE PATENTSCHRIFT

(11) **EP 2 159 536 B1**
(45) Veröffentlichungstag und Bekanntmachung des Hinweises auf die Patenterteilung: **11.10.2017**
(21) Anmeldenummer: 09008433.6
(22) Anmeldetag: 27.06.2009
(51) Int. Cl.: B29C 47/92, G01B 11/04, G01P 3/80

(54) **Verfahren zum berührungslosen Messen der Geschwindigkeit und/oder der Länge eines in Längsrichtung bewegten Strangs, insbesondere eines Kabels**
Method for contactless measurement of speed and/or the length of a string, especially a cable, moving lengthways
Procédé de mesure sans contact de la vitesse et/ou de la longueur d'un faisceau déplacé dans le sens de la longueur, notamment d'un câble

(30) Priorität: 21.08.2008 DE 102008039025
(43) Veröffentlichungstag der Anmeldung: 03.03.2010
(73) Patentinhaber: SIKORA AG, 28307 Bremen (DE)
(72) Erfinder: Sikora, Harald, 28357 Bremen (DE)
(74) Vertreter: Hauck Patentanwaltspartnerschaft mbB

(56) Entgegenhaltungen:
- DE-A1- 2 517 710
- FR-A1- 2 749 086
- GB-A- 2 220 744
- US-A1- 2002 044 289
- US-A1- 2005 213 113

## Beschreibung

Die Erfindung bezieht sich auf ein Verfahren zum berührungslosen Messen der Geschwindigkeit und/oder der Länge eines in Längsrichtung vorbewegten Stranges, insbesondere eines Kabels nach Patentanspruch 1.

Es besteht ein großer Bedarf, die Länge von produzierten Strängen, wie z.B. Adern, Kabel, Rohre oder Schläuche präzise zu messen. Eine Mantelisolieranlage fertigt z.B. Kabel im Wert von etwa € 30 Mio. pro Jahr. Jede Ersparnis bezüglich der Produktionsmenge bedeutet eine zusätzliche Wertschöpfung. So können etwa € 30.000,00 im Jahr eingespart werden, wenn die produzierte Länge um 0,1 % reduziert werden kann.
Es ist bekannt, eine berührungslose Längenmessung bei Strängen oder Bahnen nach dem Prinzip der Frequenzverschiebung (Dopplereffekt) durchzuführen. Bei der Vermessung von sogenannter Bahnenware wie Papier, Stahlblech, Gewebe oder dergleichen hat sich dieses Verfahren hervorragend bewährt. Probleme treten jedoch auf bei Längenmessungen an strangförmigen Produkten, z.B. Kabeln.

Aus GB 2 220 744 A ist ein Verfahren zum Messen der Geschwindigkeit eines in Längsrichtung bewegten Strangs bekannt, bei dem die Oberflächenstruktur des Strangs mit zwei in Bewegungsrichtung des Strangs beabstandeten Kameras einschließlich bildgebender Optiken aufgenommen wird. Aus einem zeitlichen Abstand zwischen von den Kameras detektierten Oberflächenimperfektionen wird auf die Geschwindigkeit des Strangs geschlossen. Dieses Verfahren ist hinsichtlich des Messaufbaus aufwendig und erreicht in der Praxis keine zufriedenstellende Auflösung und damit Genauigkeit.

Der Erfindung liegt daher die Aufgabe zugrunde, ein Verfahren zum berührungslosen Messen der Geschwindigkeit und/oder der Länge eines in Längsrichtung vorbewegten Strangs, beispielsweise eines Kabels, anzugeben, mit dem weitgehend fehlerfrei präzise Messergebnisse erzielt werden.

Diese Aufgabe wird durch die Merkmale des Patentanspruchs 1 gelöst.

Die Erfindung geht von der Erkenntnis aus, dass ein Beugungsmuster, das von einer begrenzten Länge der Kante eines Strangs erzeugt wird, für diesen Längenabschnitt des Strangs charakteristisch ist und sich von den Beugungsmustern unterscheidet, die nachfolgende Längenabschnitte des Stranges verursachen. Wenn man mit Hilfe der Empfangsfläche eines geeigneten Bildsensors und einer Analyse des Beugungsmusters feststellt, dass ein einmal erfasstes Beugungsmuster bzw. ein charakteristisches Merkmal des Beugungsmusters an einem räumlich beabstandeten Ort wieder auftaucht, kann aus der Zeit, die zwischen der ersten Erfassung des Beugungsmusters und seiner Übereinstimmung mit einem am zweiten Ort erfassten Beugungsmuster verstreicht und dem Abstand der Orte die Geschwindigkeit bestimmt werden, mit dem der Strang die Strecke zwischen erstem und zweitem Ort zurückgelegt hat. Wird der beschriebene Vorgang ständig wiederholt, kann zu jedem Zeitpunkt die Stranggeschwindigkeit ermittelt und damit auch eine präzise Längenbestimmung vorgenommen werden, auch wenn während des Vorschubs Geschwindigkeitsschwankungen auftreten.

Die Verwendung von Beugungsmustern zu Messzwecken ist aus EP 0 924 493 bekannt geworden. Bei dem bekannten Messverfahren wird der Durchmesser eines Stranges insbesondere eines Kabels kleineren Durchmessers bestimmt, indem ein fächerförmiger Strahl einer monochromatischen, punktförmigen Lichtquelle auf den Strang quer zu diesem gerichtet wird. Der Schatten des Strangs wird auf einen zeilenförmigen lichtempfindlichen Sensor an sich bekannter Bauart projiziert. Die gemessenen, durch Beugung verursachten, Signale des Sensors geben einen Aufschluss über die Lage der Beugungskante im Messraum. Aufgrund von Beugungserscheinungen ergeben sich die geometrischen Schattengrenzen aus dem Intensitätsverlauf der auf den Sensor auftreffenden Strahlung zwar nicht unmittelbar, können jedoch aus den sich einstellenden Beugungssäumen abgeleitet werden. Bei der Erfindung werden die Beugungsmuster, d.h. charakteristische Merkmale der gemessenen Intensitätsverläufe, dazu verwendet, Längeneinheiten der Oberfläche eines Stranges zu markieren, um festzustellen, in welcher Zeit sich die markierten Oberflächen von einem ersten zu einem zweiten Ort bewegen. Die Ankunft am zweiten Ort wird durch eine ausreichende

Übereinstimmung von charakteristischen Merkmalen eines am ersten Ort erfassten Beugungsmusters mit charakteristischen Merkmalen eines am zweiten Ort erfassten Beugungsmusters festgestellt. Eine Korrelation zwischen ersten und zweiten Beugungsmustern bzw. deren kennzeichnenden Merkmalen wird vorzugsweise mit Hilfe der sogenannten Kreuzkorrelationsfunktion ermittelt. In der Signalanalyse wird die Kreuzkorrelationsfunktion bekanntlich zur Beschreibung der Korrelation zweier Signale bei unterschiedlichen Zeitverschiebungen zwischen den Signalen verwendet.

Bei dem erfindungsgemäßen Verfahren wird ein erster optischer Strahl auf einer Seite des Stranges quer zu diesem gerichtet. Der Strahl wird von einer ersten Empfangsfläche eines ersten Bildsensors an einem vorgegebenen ersten Ort auf der gegenüberliegenden Seite des Strangs empfangen. An der Kante des Strangs findet eine Beugung statt, und entsprechende Beugungsmuster - d.h. Intensitätsverläufe der empfangenen Strahlung - werden an der Schattengrenze auf der ersten Empfangsfläche abgebildet. Die Beugungsmuster werden erfasst und ausgewertet. Das Beugungsmuster hat einen typischen Verlauf, z.B. mehrere fortlaufend kleiner werdenden Maxima. Die Lage eines Maximums auf dem Bildsensor ist charakteristisch für die Kontur des Strangs an der betrachteten Stelle. Daher können für die Analyse der jeweiligen Beugungsmuster ein oder mehrere Maxima verwendet werden. Es ist auch denkbar, aus dem Beugungsmuster rechnerisch die jeweiligen Schattengrenzen genau zu ermitteln und zu betrachten. In jedem Falle lässt sich durch die Analyse des Beugungsmusters die beleuchtete Kontur der Kante des Stranges charakterisieren, auch wenn Oberflächenunebenheiten mit dem bloßen Auge nicht mehr wahrgenommen werden können. Die Erfindung nutzt mithin aus den Beugungsmustern abgeleitete Charakteristika, um Oberflächenmerkmale für den Strang zu gewinnen und es kann ermittelt werden, in welcher Zeit ein Oberflächenmerkmal eine bestimmte Strecke zurückgelegt hat. Daraus kann die Geschwindigkeit ermittelt werden.

Zu dem angegebenen Zweck wird auf eine zweite Empfangsfläche des ersten oder eines zweiten Bildsensors, die in Vorschubrichtung des Strangs an einem vom ersten Ort der ersten Empfangsfläche beabstandeten zweiten Ort auf der gleichen Seite wie die erste Empfangsfläche angeordnet ist, ein zweiter optischer Strahl gerichtet, der wie der erste Strahl quer zum Strang verläuft. Es versteht sich, dass eine einzige Lichtquelle verwendet werden kann, deren Strahl sowohl auf die erste als auch auf die zweite Empfangsfläche trifft. Es ist jedoch auch möglich, getrennte Lichtquellen vorzusehen, die in Längsrichtung des Stranges beabstandet angeordnet werden. Hierauf wird weiter unten noch eingegangen.

Auf der zweiten Empfangsfläche werden an der Schattengrenze ebenfalls Beugungsmuster abgebildet, die ebenfalls erfasst und ausgewertet werden, wie bereits oben erläutert wurde. In einer Auswertevorrichtung wird festgestellt, nach welcher Zeitspanne charakteristische Merkmale eines an der ersten Empfangsfläche erfassten Beugungsmusters mit charakteristischen Merkmalen eines an der zweiten Empfangsfläche erfassten zweiten Beugungsmuster annähernd korrelierten. Aus dem Abstand der Empfangsflächen beziehungsweise der Abbildungsorte der Merkmale von ersten und zweiten Beugungsmustern auf den Empfangsflächen und der Zeitspanne wird die Vorschubgeschwindigkeit des Strangs und daraus die vorgeschobene Länge des Strangs bestimmt.

Gegenüber einer fokussierenden optischen Analyse der Oberfläche eines Strangs hat die Erfindung den Vorteil, dass eine Optik nicht erforderlich ist. Eine korrigierte Optik lässt keine Auflösung unter 5 µm zu, ist daher in ihrer Präzision beschränkt, den Aufwand dafür außer Betracht gelassen. Die Erfindung erfordert keine Fokussierung und gewährleistet eine hohe Auflösung. Bei der Erfindung reichen daher minimale Oberflächenänderungen, um diese gleichwohl über Beugungsmuster zu erkennen und zu markieren. Abstandsänderungen des Strangs von der Lichtquelle bzw. vom Bildsensor führen zu unterschiedlichen Dehnungen der Beugungsmuster, ändern aber nicht deren charakteristische Merkmale.

Beim erfindungsgemäßen Verfahren werden vorzugsweise zwei Bildsensoren, deren Empfangsflächen Zeilen und Spalten aufweisen, verwendet. Geeignete hochauflösende Bildsensoren sind allgemein bekannt. Sie weisen z.B. 1.280 x 1.024 Pixel auf. Die Bildsensoren werden z.B. in einem Abstand von 50 mm angeordnet. Es ist jedoch auch möglich, einen einzigen Bildsensor zu verwenden, und den ersten und zweiten Ort der Erfassung der Beugungsmuster örtlich beabstandet auf der Empfangsfläche des einzigen Bildsensors zu wählen. Der Abstand zwischen den Empfangsorten ist in diesem Fall naturgemäß klein.

Es ist denkbar, mit Hilfe einer einzigen Lichtquelle den ersten und zweiten Lichtstrahl zu erzeugen, welcher auf den Empfangsflächen über eine Kante des Strangs Beugungsmuster erzeugt. Nach einer Ausgestaltung der Erfindung werden ein erster und ein zweiter divergenter Strahl von in Längsrichtung beabstandeten punktförmigen Lichtquellen verwendet. Punktförmige Lichtquellen erzeugen bekanntlich einen Fächerstrahl. Punktförmige Lichtquellen sind z.B. geeignete Halbleiterlaser, die ein im Wesentlichen monochromatisches Licht erzeugen. Optische Mittel zwischen den punktförmigen Lichtquellen und den Bildsensoren können entfallen. Der apparative Aufwand zur Durchführung des erfindungsgemäßen Verfahrens ist denkbar gering.

Das Licht des optischen Strahls kann im sichtbaren oder im angrenzenden nicht sichtbaren Bereich des Spektrums liegen.

Die Ansteuerung der Bildsensoren bzw. der Empfangsflächen erfolgt nach einer weiteren Ausgestaltung der Erfindung so, dass erste und zweite Beugungsmuster mit einer vorgegebenen Frequenz erfasst und ihre charakteristischen Merkmale gespeichert werden. Ist die Vorschubgeschwindigkeit des Strangs bekannt, kann in etwa angegeben werden, welche Zeit das Beugungsmuster, das am ersten Ort erzeugt worden ist bzw. kennzeichnenden Merkmale von diesem, benötigt, um am zweiten Ort mit dem dort erzeugten Beugungsmuster bzw. dessen kennzeichnenden Merkmalen zu korrelieren. Der Ort der Korrelation auf der zweiten Empfangsfläche kann jedoch variieren und hängt von der tatsächlichen Geschwindigkeit bzw. tatsächlichen Länge des Strangs ab, welche mit üblichen Geschwindigkeitsmessern, wie z.B. Tachogeneratoren oder dergleichen nicht präzise genug ermittelt werden kann. Somit hat der Ort der Koinzidenz bzw. Korrelation von Beugungsmustern auf der zweiten Empfangsfläche zumeist einen Versatz gegenüber einer Bezugslinie, beispielsweise einer Mittenlinie der Empfangsfläche, falls dies nicht willkürlich verhindert wird. Daher sieht eine Ausgestaltung der Erfindung vor, dass die Erfassung der zweiten Beugungsmuster gegenüber der der ersten Beugungsmuster mit einer Phasenverschiebung erfolgt, wobei die Größe der Phasenverschiebung dem zeitlichen Abstand entspricht, den der Ort der Übereinstimmung des ersten Beugungsmusters bzw. seine kennzeichnenden Merkmale mit dem zweiten Beugungsmuster bzw. seine kennzeichnenden Merkmale auf der zweiten Empfangsfläche von einer Mittenoder Referenzlinie der zweiten Empfangsfläche aufweist. Würde für den zweiten Strahl paralleles Licht verwendet, wäre eine Phasenverschiebung nicht notwendig, da über die Spalten des Bildsensors der Ort der Übereinstimmung von ersten und zweiten Beugungsmustern bzw. deren kennzeichnenden Merkmalen ohne weiteres fehlerfrei ermittelt werden kann. Bei einem fächerförmigen Strahl hingegen gibt es im Abstand zur Mittenachse des Fächerstrahls naturgemäß Fehler, so dass eine Messung präziser wird, wenn der Ort der Korrelation nach Möglichkeit in die Mitte der zweiten Empfangsfläche oder auf einer mit der Mittenachse ausgerichteten Referenzlinie der Empfangsflächen gelegt wird bzw. an einen Ort, welcher mit der Achse des Fächerstrahls bzw. der punktförmigen Lichtquelle zusammenfällt.

Das erfindungsgemäße Verfahren kann auch dazu verwendet werden festzustellen, ob ein Strang sich, z.B. zu Produktionsbeginn, bewegt. Zu diesem Zweck wird mit Hilfe des ersten Bildsensors bzw. der ersten Empfangsfläche und der Auswertevorrichtung festgestellt, ob zeitlich beabstandete Beugungsmuster bzw. kennzeichnende Merkmale von diesen eine örtliche Verschiebung zueinander aufweisen. Ist dies der Fall, lässt sich eine Bewegung des Stranges ermitteln und auch die Bewegungsrichtung.

Mehr oder weniger flexible Stränge, z.B. Kabel, weisen bei der Produktion bzw. ihrem Aufwickeln z.B. auf eine Rolle einen Durchhang auf, durch den die Länge des Strangs zwischen zwei beabstandeten Orten vergrößert wird. Daher sieht eine Ausgestaltung der Erfindung vor, dass bei annähernd horizontal bewegtem Strang der optische Strahl gegen die untere Kante des Strangs gerichtet wird. Auf diese Weise wird unabhängig vom Durchhang die tatsächliche Länge des Strangs gemessen.

Die Erfindung soll nachfolgend anhand eines in Zeichnungen dargestellten Ausführungsbeispiels näher erläutert werden.
- Fig. 1: zeigt schematisch die Anordnung einer punktförmigen Lichtquelle und eines Bildsensors mit einer Messachse quer zu einem Kabel sowie ein Beugungsmuster in der gezeigten Messebene,
- Fig. 2: zeigt den Verlauf von z.B. ersten Maxima von Beugungsmustern, die von Längenabschnitten des Kabels nach Figur 1 erzeugt worden sind, und zwar an beabstandeten Orten auf einem Bildsensor,
- Fig.3: zeigt eine Anordnung zur Durchführung des erfindungsgemäßen Verfahrens,
- Fig. 4: zeigt ein Blockbild zum erfindungsgemäßen Verfahren.

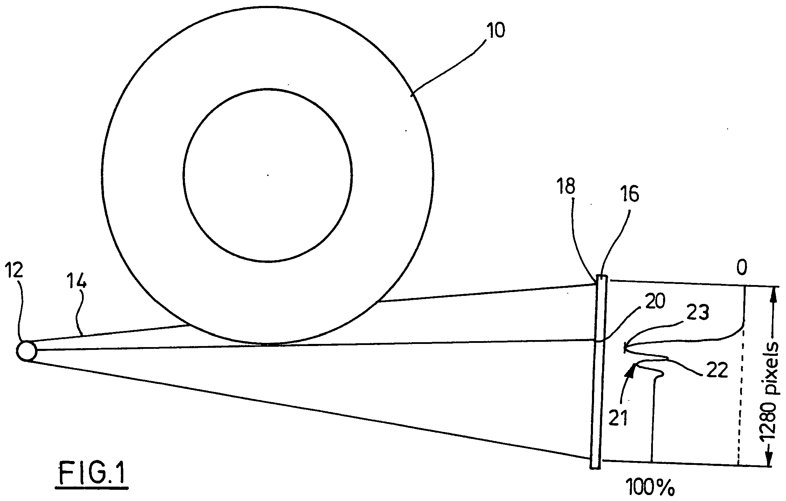

In Figur 1 ist ein Kabel 10 dargestellt, dessen Achse senkrecht auf der Zeichenebene steht. Eine punktförmige Lichtquelle 12, beispielsweise ein Halbleiterlaser, erzeugt einen Fächerstrahl 14, der quer zur Achse des Kabels 10 gerichtet ist. Auf einem Bildsensor 16, der z.B. Spalten mit 1.280 Pixel und Zeilen mit 1.024 Pixel aufweist, wird ein Schatten 18 abgebildet. An der Schattengrenze bei 20 findet eine Beugung statt, welche durch den bei 21 angedeuteten Intensitätsverlauf des empfangenen Lichts charakterisiert wird. Der gezeigte Verlauf 21 findet innerhalb einer Spalte des Bildsensors 16 statt, der senkrecht zur Zeichenebene z.B. 1024 Spalten aufweist. Bei 23 ist das erste Maximum gezeigt. Bei 22 liegt ein erstes Minimum. Die tatsächliche Schattengrenze liegt am Übergang von der Dunkelwertamplitude zum ersten Maximum des Beugungssaumes.

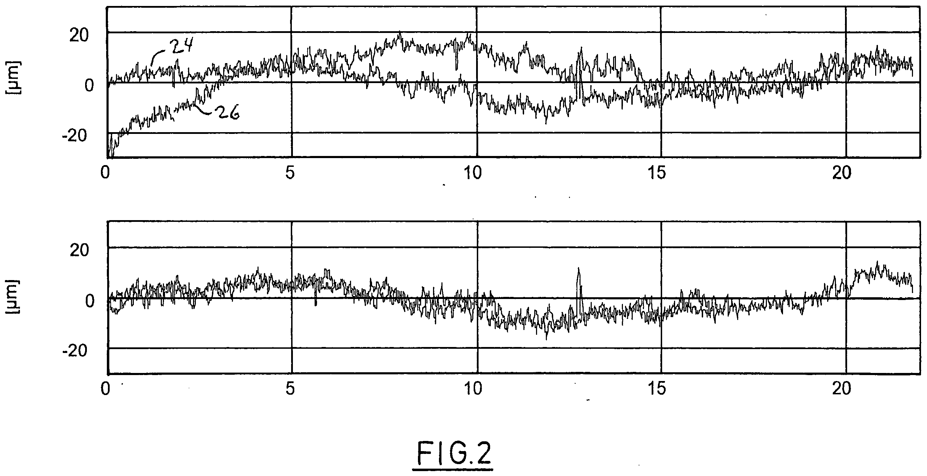

Das Beugungsmuster ist von der Beschaffenheit der Oberfläche der Kabelummantelung, d.h. ihrer Kontur, abhängig. Selbst wenn diese äußerst glatt ist, hat sie gleichwohl eine bestimmte Unebenheit oder Struktur, die mit einem hochauflösenden Bildempfänger und Beugungseffekten erfasst werden kann. In Figur 2 oben ist bei 24 der Verlauf der ersten Maxima eines ersten Beugungsmusters und bei 26 der Verlauf der ersten Maxima eines zweiten Beugungsmusters abgebildet. Die Beugungsmuster sind zu verschiedenen Zeitpunkten vom gleichen Längsabschnitt des Kabels verursacht. Da beide Diagramme von gleichen Oberflächenabschnitten stammen, können sie durch Verschiebung annähernd zur Deckung gebracht werden, wie in Fig. 2 unten gezeigt. Um die Korrelation herzustellen, ist eine Verschiebung beider Diagramme 24, 26 um etwa 340 Spalten auf der Fläche des Bildsensors 16 erforderlich, was einem Abstand von 3,8 mm entspricht.

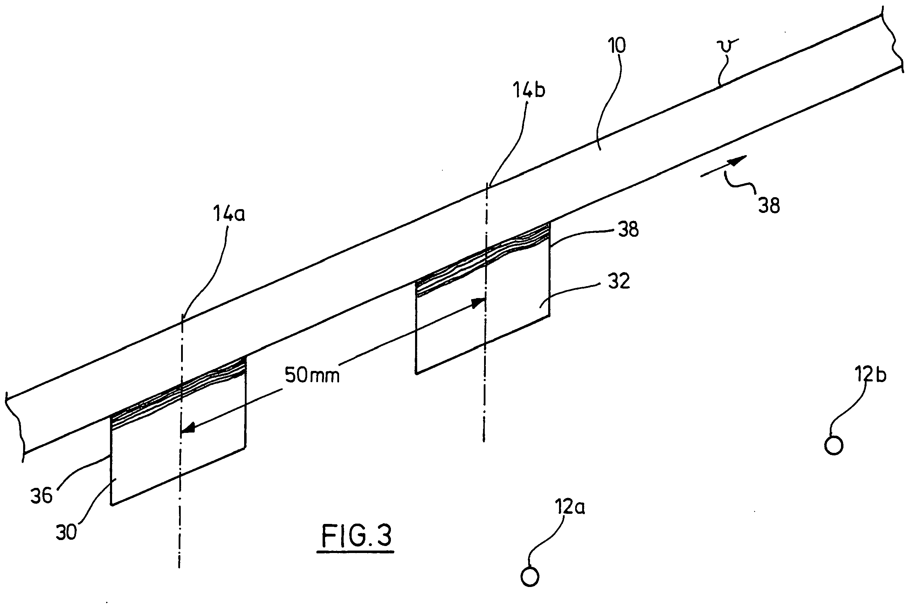

In Figur 3 ist wieder das Kabel 10 zu erkennen sowie eine erste punktförmige Lichtquelle 12a und eine zweite punktförmige Lichtquelle 12b im Abstand voneinander, wobei dieser Abstand parallel zur Längsrichtung des Kabels 10 verläuft. Die Lichtquelle 12a erzeugt einen ersten fächerförmigen Strahl 14a und die zweite Lichtquelle 12b einen zweiten fächerförmigen Strahl 14b. Die punktförmigen Lichtquellen 12a und 12b sind wiederum von einem Halbleiterlaser gebildet. Auf der den Lichtquellen 12a und 12b gegenüberliegenden Seite des Kabels 10 sind Bildsensoren angeordnet, welche durch ihre Empfangsflächen 30, 32 angedeutet sind. Der Abstand der Mittenlinien der Empfangsflächen 30, 32 der Bildsensoren ist mit 50 mm angegeben. Die punktförmigen Lichtquellen 12a und 12b erzeugen, wie oben beschrieben, an der unteren Kante des Kabels 10 auf den Empfangsflächen 30, 32 Beugungsmuster, wie bei 36 bzw. 38 dargestellt. Das Kabel 10 wird in Richtung des Pfeils 38 mit einer Geschwindigkeit v vorbewegt. Die Geschwindigkeit kann mit Hilfe einer geeigneten Geschwindigkeitsmessvorrichtung gemessen werden, beispielsweise einem Tachogenerator an der Abzugsraupe oder dergleichen. Der gemessene Geschwindigkeitswert vₘ ist jedoch nicht ausreichend präzise.

Das auf der Empfangsfläche 30 abgebildete Beugungsmuster erscheint auch auf der zweiten Empfangsfläche 32, wenn der zugehörige Oberflächenabschnitt des Kabels 10 die zweite Empfangsfläche 32 erreicht hat. Die abgebildeten Beugungsmuster sind durch bestimmte Merkmale charakterisiert, z.B. durch ihre ersten Maxima, durch eine Mehrzahl von Minima und mit abnehmender Amplitude Maxima, durch die rechnerisch ermittelbare exakte Schattengrenze oder dergleichen. Wird festgestellt werden, wie lange das Beugungsmuster 36, d.h. sein charakteristisches Merkmal, von einem bestimmten Ort auf der ersten Empfangsfläche bis zu einem bestimmten Ort auf der zweiten Empfangsfläche 32 benötigt hat, kann daraus die exakte Geschwindigkeit v des Kabels 10 bestimmt werden, da der Abstand der Empfangsflächen 30, 32 bzw. der bestimmten Orte bekannt ist.

Die Übereinstimmung der Beugungsmuster bzw. die Korrelation ihrer charakteristischen Merkmale kann mit Hilfe der Kreuzkorrelationsfunktion bestimmt werden. Es ist keine 100 %-ige Übereinstimmung gefordert, sondern eine größtmögliche, die Gewähr dafür bietet, dass das an der ersten Empfangsfläche 30 erfasste Beugungsmuster dasjenige ist, das an der Empfangsfläche 32 mit dem dort abgebildeten Beugungsmuster weitgehend übereinstimmt und somit die Oberflächenorte des Kabels an der ersten und zweiten Empfangsfläche. Der Ort der Übereinstimmung hat daher den geometrischen Abstand vom ersten Ort der Erfassung des Beugungsmusters bzw. seines charakteristischen Merkmals an der Empfangsfläche 30.

Bei dem beschriebenen Messverfahren wird in Zeitabständen, vorzugsweise mit vorgegebener Frequenz eine Erfassung der Beugungsmuster auf den Empfangsflächen 30, 32 durchgeführt. Aus der auf einem anderen Wege gemessenen Geschwindigkeit vₘ des Kabels 10 kann ungefähr das Zeitfenster bestimmt werden, in dem das erste Beugungsmuster am Ort der zweiten Empfangsfläche 32 erscheint. Der genaue Ort wird dadurch ermittelt, dass die Lage der Übereinstimmung der charakteristischen Merkmale auf der Empfangsfläche 32 ermittelt wird, was mit Hilfe der Spalten der Empfangsfläche des Bildsensors problemlos möglich ist, wobei dieser Ort zumeist einen Abstand zu einer Mitten- oder Referenzlinie aufweist. Bei der Bestimmung der Geschwindigkeit v ist dieser Versatz unkritisch, wenn parallele Strahlen auf das Kabel und die Bildsensoren geworfen werden. Im vorliegenden Fall sind jedoch Fächerstrahlen vorgesehen, und die Erfassung der Beugungsmuster an einem Ort mit Versatz z.B. zur Mittenlinie der zweiten Empfangsfläche führt unter Umständen zu einer ungenauen Messung. Um diesen Nachteil zu beheben, erfolgt die Erfassung der Beugungsmuster an der zweiten Empfangsfläche mit einer Phasenverschiebung gegenüber der Erfassung der Beugungsmuster an der ersten Empfangsfläche. Diese Phasenverschiebung ergibt sich aus dem Versatz, den der ermittelte Ort der Übereinstimmung von ersten und zweiten Beugungsmustern zu dieser Mittenlinie hat. Liegt dieser Versatz z.B. in Richtung der ersten Empfangsfläche, wird die Erfassung des Beugungsmusters an der zweiten Empfangsfläche geringfügig verzögert, wodurch der Ort der Erfassung der zweiten Beugungsmuster etwa im Bereich der Mittenlinie liegt.

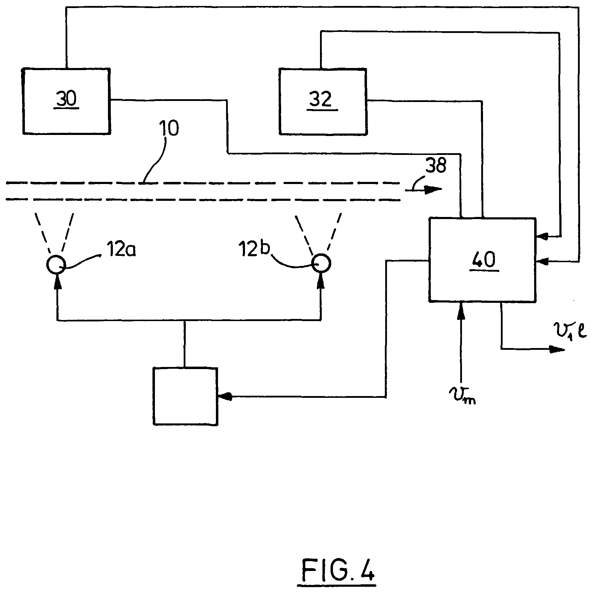

In Figur 4 ist das Kabel 10 durch gestrichelte Linien angedeutet. Außerdem sind die Empfangsflächen 30, 32 gemäß Figur 3 zu erkennen und die punktförmigen Lichtquellen 12a und 12b. Die Bildsignale der Empfangsflächen 30, 32 bzw. den Bildsensoren gehen auf eine Auswertevorrichtung 40. Die Bildsensoren werden von der Auswertevorrichtung 40 mit einer vorgegebenen Frequenz angesteuert, wobei, wie erwähnt, der Bildsensor mit der Empfangsfläche 32 mit einer Phasenverschiebung aktiviert wird, entsprechend dem räumlichen Versatz der Übereinstimmung von ersten und zweiten Beugungsmustern gegenüber einer Mitten- oder einer Referenzlinie auf der zweiten Empfangsfläche 32. In der Auswertevorrichtung 40 findet die Analyse der abgebildeten Beugungsmuster statt, etwa auf die ersten Maxima hin, woraus sich die Kennzeichnung des jeweiligen Oberflächenabschnitts des Kabelmantels ergibt. Ferner ermittelt die Auswertevorrichtung, wie beschrieben, eine Korrelation charakteristischer Merkmale der Beugungsmuster und daraus die Geschwindigkeit v und damit die jeweilige Länge des Kabels 10.

Die Beleuchtung der unteren Kante des Kabels berücksichtigt den Durchhang, der normalerweise auftritt.

Eine Auswertung von zeitlich beabstandeten ersten Beugungsmustern bzw. ihrer charakteristischen Merkmale auf der ersten Empfangsfläche ermöglicht auch die Feststellung, ob das Kabel vorbewegt wird und in welche Richtung. Steht das Kabel still, fallen alle ersten Beugungsmuster zusammen. Bewegt es sich, haben gleiche Beugungsmuster einen räumlichen Abstand voneinander.

## Patentansprüche

1. Verfahren zum berührungslosen Messen der Geschwindigkeit und/oder der Länge eines in Längsrichtung vorbewegten Strangs, insbesondere eines Kabels (10), während der Produktion, durch folgende Schritte gekennzeichnet:
- ein erster optischer Strahl wird auf einer Seite quer zum Strang gerichtet und von einer ersten Empfangsfläche (30) eines ersten Bildsensors (16) an einem vorgegebenen ersten Ort auf der gegenüberliegenden Seite des Strangs empfangen,
- zu vorgegebenen Zeitpunkten werden die an den Schattengrenzen (20) auf der ersten Empfangsfläche (30) abgebildeten ersten Beugungsmuster (36) auf mindestens ein spezifisches, die Oberflächenkontur charakterisierendes Merkmal analysiert, und das die Oberflächenkontur charakterisierende Merkmal wird gespeichert,
- auf eine zweite Empfangsfläche (32) des ersten oder eines zweiten Bildsensors (16), die in Vorschubrichtung des Strangs an einem vom ersten Ort der ersten Empfangsfläche (30) beabstandeten zweiten Ort auf der gleichen Seite wie die erste Empfangsfläche (30) angeordnet ist, wird ein quer zum Strang gerichteter zweiter optischer Strahl gerichtet
- an den Schattengrenzen auf der zweiten Empfangsfläche (32) abgebildete zweite Beugungsmuster (38) werden auf mindestens ein die Oberflächenkontur charakterisierendes Merkmal hin analysiert,
- in einer Auswertevorrichtung (40) wird festgestellt, nach welcher Zeitspanne ein charakterisierendes Merkmal eines an der ersten Empfangsfläche (30) erfassten ersten Beugungsmusters (36) mit charakterisierendem Merkmal eines auf der zweiten Empfangsfläche (32) erfassten zweiten Beugungsmuster (38) annähernd korreliert
- aus dem Abstand der Empfangsflächen (30, 32) bzw. der Abbildungsorte des charakterisierenden Merkmals von ersten und zweiten Beugungsmustern (36, 38) auf den Empfangsflächen (30, 32) und der Zeitspanne wird die Vorschubgeschwindigkeit des Strangs und daraus die vorgeschobene Länge des Strangs bestimmt.

2. Verfahren nach Anspruch 1, **dadurch gekennzeichnet, dass** ein erster und zweiter divergenter Strahl von in Längsrichtung des Strangs beabstandeten punktförmigen Lichtquellen (12a, 12b) verwendet werden.

3. Verfahren nach Anspruch 2, **dadurch gekennzeichnet, dass** die punktförmigen Lichtquellen von Halbleiterlasern gebildet sind.

4. Verfahren nach Anspruch 2 oder 3, **dadurch gekennzeichnet, dass** die erste und zweite punktförmige Lichtquelle (12a, 12b) ohne weitere optische Mittel auf den Strang gerichtet werden und zwischen dem Strang und dem Bildsensor (16) keine optischen Mittel angeordnet sind.

5. Verfahren nach einem der Ansprüche 1 bis 4, **dadurch gekennzeichnet, dass** die Empfangsflächen (30, 32) lichtempfindliche Zeilen und Spalten aufweisen.

6. Verfahren nach einem der Ansprüche 1 bis 5, **dadurch gekennzeichnet, dass** das erste und zweite Beugungsmuster (36, 38) mit einer vorgegebenen Frequenz an der ersten und zweiten Empfangsfläche (30, 32) erfasst werden und in der Auswertevorrichtung (40) mit Hilfe der Kreuzkorrelationsfunktion die Korrelation von charakteristischen Merkmalen von ersten und zweiten Beugungsmustern (36, 38) ermittelt wird.

7. Verfahren nach Anspruch 2 und 6, **dadurch gekennzeichnet, dass** die Erfassung der zweiten Beugungsmuster (38) gegenüber der der ersten Beugungsmuster (36) mit einer Phasenverschiebung erfolgt, wobei die Größe der Phasenverschiebung dem zeitlichen Abstand entspricht, den der Ort der Übereinstimmung der charakteristischen Merkmale der ersten Beugungsmuster (36) mit denen der zweiten Beugungsmuster (38) auf der zweiten Empfangsfläche (32) von einer Mitten- oder Referenzlinie auf der zweiten Empfangsfläche aufweist (32).

8. Verfahren nach einem der Ansprüche 1 bis 7, **dadurch gekennzeichnet, dass** mit Hilfe des ersten Bildsensors (16) bzw. der ersten Empfangsfläche (32) und der Auswertevorrichtung (40) festgestellt wird, ob der Strang bewegt wird und in welcher Richtung, indem ermittelt wird, ob zeitlich beabstandete erste Beugungsmuster (36) bzw. charakteristische Merkmale der Beugungsmuster (36) eine örtliche Verschiebung zueinander aufweisen.

9. Verfahren nach einem der Ansprüche 1 bis 8, **dadurch gekennzeichnet, dass** der Strang annähernd horizontal bewegt und der optische Strahl gegen die untere Kante des Strangs gerichtet wird.

## Claims

1. A method for contactless measurement of the speed and/or the length of a strand, especially of a cable (10), moved forward lengthways, during production, **characterized by** the following steps:
- a first optical beam is oriented on one side transversely to the strand and received by a first receiving surface (30) of a first image sensor (16) at a predetermined first location on the opposing side of the strand,
- at predetermined times, the first diffraction patterns (36) imaged at the shadow boundaries (20) on the first receiving surface (30) are analysed for at least one specific feature characterizing the surface contour and the feature characterizing the surface contour is stored,
- a second optical beam oriented transversely to the strand is oriented toward a second receiving surface (32) of the first or a second image sensor (16), said second receiving surface being arranged in the advancing direction of the strand at a second location which is on the same side as the first receiving surface (30) and which is spaced apart from the first location of the first receiving surface (30),
- second diffraction patterns (38) imaged at the shadow boundaries on the second receiving surface (32) are analysed for at least one feature characterizing the surface contour,
- in an evaluation device (40) it is determined after which time interval a characterizing feature of a first diffraction pattern (36) detected on the first receiving surface (30) correlates approximately with a characterizing feature of a second diffraction pattern (38) detected on the second receiving surface (32),
- the advancing speed of the strand and therefrom the advanced length of the strand is determined from the distance between the receiving surfaces (30, 32) or respectively the imaging locations of the characterizing feature of the first and second diffraction patterns (36, 38) on the receiving surfaces (30, 32) and the time interval.

2. The method according to Claim 1, **characterized in that** a first and second divergent beam from punctiform light sources (12a, 12b) spaced apart in the longitudinal direction of the strand are used.

3. The method according to Claim 2, **characterized in that** the punctiform light sources are formed by semi-conductor lasers.

4. The method according to Claim 2 or 3, **characterized in that** the first and second punctiform light sources (12a, 12b) are oriented toward the strand without further optical means and no optical means are arranged between the strand and the image sensor (16).

5. The method according to one of Claims 1 to 4, **characterized in that** the receiving surfaces (30, 32) comprise light-sensitive rows and columns.

6. The method according to one of Claims 1 to 5, **characterized in that** the first and second diffraction patterns (36, 38) are detected at a predetermined frequency on the first and second receiving surfaces (30, 32) and the correlation of characteristic features of first and second diffraction patterns (36, 38) is determined in the evaluation device (40) by means of the cross correlation function.

7. The method according to Claim 2 and 6, **characterized in that** the detection of the second diffraction pattern (38) takes place with a phase shift relative to that of the first diffraction pattern (36), wherein the magnitude of the phase shift corresponds to the distance in time which the location of the coincidence of the characteristic features of the first diffraction patterns (36) with those of the second diffraction patterns (38) on the second receiving surface (32) has from a central line or reference line on the second receiving surface (32).

8. The method according to one of Claims 1 to 7, **characterized in that** it is determined by means of the first image sensor (16) or respectively the first receiving surface (32) and the evaluation device (40), whether the strand is moved and in which direction, by it being determined whether first diffraction patterns (36) spaced apart chronologically or respectively characteristic features of the diffraction patterns (36) have a spatial shift relative to one another.

9. The method according to one of Claims 1 to 8, **characterized in that** the strand moves approximately horizontally and the optical beam is oriented toward the lower edge of the strand.

## Revendications

1. Procédé de mesure sans contact de la vitesse et/ou de la longueur d'un brin déplacé vers l'avant en direction longitudinale, notamment d'un câble (10), pendant la production, **caractérisé par** les étapes suivantes :
- un premier rayon optique est orienté sur un côté transversalement au brin et reçu par une première face de réception (30) d'un premier capteur d'image (16) en un premier lieu prédéfini sur le côté opposé du brin,
- les premières figures de diffraction (36) représentées aux limites d'ombre (20) sur la première face de réception (30) sont analysées à des instants prédéfinis sur au moins une caractéristique spécifique, caractérisant le contour superficiel et la caractéristique caractérisant le contour superficiel est enregistrée,
- un second rayon optique orienté transversalement au brin est orienté sur une seconde face de réception (32) du premier ou d'un second capteur d'image (16) qui est disposé dans la direction d'avance du brin en un second lieu écarté du premier lieu de la première face de réception (30) sur le même côté que la première face de réception (30),
- des secondes figures de diffraction (38) représentées aux limites d'ombre sur la seconde face de réception (32) sont analysées sur au moins une caractéristique caractérisant le contour superficiel,
- il est constaté dans un dispositif d'analyse (40) après quel laps de temps une caractéristique caractérisante d'une première figure de diffraction (36) détectée sur la première face de réception (30) est en corrélation approximative avec une caractéristique caractérisante d'une seconde figure de diffraction (38) détectée sur la seconde face de réception (32),
- la vitesse d'avance du brin et à partir de celle-ci la longueur avancée du brin sont déterminées à partir de l'écart des faces de réception (30, 32) ou des lieux de représentation de la caractéristique caractérisante de première et seconde figures de diffraction (36, 38) sur les faces de réception (30, 32) et du laps de temps.

2. Procédé selon la revendication 1, **caractérisé en ce qu'**un premier et un second rayons divergents de sources lumineuses ponctuelles (12a, 12b) écartées dans la direction longitudinale du brin sont utilisés.

3. Procédé selon la revendication 2, **caractérisé en ce que** les sources lumineuses ponctuelles sont formées de lasers à semi-conducteur.

4. Procédé selon la revendication 2 ou 3, **caractérisé en ce que** les première et seconde sources lumineuses ponctuelles (12a, 12b) sont orientées sur le brin sans autres moyens optiques et aucun moyen optique n'est disposé entre le brin et le capteur d'image (16).

5. Procédé selon une des revendications 1 à 4, **caractérisé en ce que** les faces de réception (30, 32) présentent des lignes et colonnes sensibles à la lumière.

6. Procédé selon une des revendications 1 à 5, **caractérisé en ce que** les première et seconde figures de diffraction (36, 38) sont détectées avec une fréquence prédéfinie sur les première et seconde faces de réception (30, 32), et la corrélation de caractéristiques caractérisantes de première et seconde figures de diffraction (36, 38) est déterminée dans le dispositif d'analyse (40) à l'aide de la fonction de corrélation croisée.

7. Procédé selon les revendications 2 et 6, **caractérisé en ce que** la détection des secondes figures de diffraction (38) s'effectue avec un déphasage par rapport à celle des premières figures de diffraction (36), dans lequel la grandeur du déphasage correspond à l'intervalle temporel que présente le lieu de la concordance des caractéristiques caractérisantes des premières figures de diffraction (36) avec celles des secondes figures de diffraction (38) sur la seconde face de réception (32) d'une ligne centrale ou de référence sur la seconde face de réception (32).

8. Procédé selon une des revendications 1 à 7, **caractérisé en ce qu'**il est constaté à l'aide du premier capteur d'image (16) ou de la première face de réception (32) et du dispositif d'analyse (40) si le brin est déplacé et dans quelle direction, **en ce qu'**il est déterminé si des premières figures de diffraction (36) écartées dans le temps ou caractéristiques caractérisantes des figures de diffraction (36) présentent un décalage local les unes par rapport aux autres.

9. Procédé selon une des revendications 1 à 8, **caractérisé en ce que** le brin est déplacé approximativement horizontalement et le rayon optique est orienté contre l'arête inférieure du brin.
